# EUROPEAN PATENT APPLICATION

(11) **EP 2 930 963 A1**
(43) Date of publication of application: **14.10.2015**
(21) Application number: 14305526.7
(22) Date of filing: 10.04.2014
(51) Int. Cl.: H04W 12/08, H04L 29/06, H04L 29/08

(54) **Method for providing a hotspot service including a captive portal, respective router, application and computer readable storage medium**

(71) Applicant: Thomson Licensing, 92130 Issy-les-Moulineaux (FR)
(72) Inventor: De Bie, Sven, 2500 Lier (BE)
(74) Representative: Arnold, Klaus-Peter

(57) **Abstract**

The method for providing a hotspot service comprises the steps of receiving data packets from an portable device (22), allowing access to the Internet in case the device is authorized for Internet access (20), in case the device is not authorized for Internet access, analyzing a header of the data packets (24), redirecting packets having a destination port 80 or 8080 to a login page (32) or a walled garden (30), and blocking all packets having a destination port different from port 80 or 8080 (26). The hotspot service is provided in particular by a router and the login page by a backend server.

## Description

### TECHNICAL FIELD

The invention relates to the field of hotspots comprising a captive portal for authorization and routers providing a respective hotspot service.

### BACKGROUND OF THE INVENTION

With the success of wireless networks, in particular with regard to the Wi-Fi IEEE 802.11 standards, a large variety of portable devices are known which can access the Internet via the Wi-Fi-connection, in addition to any mobile phone connection. Many public locations allow in the meanwhile also Wi-Fi access for Wi-Fi enabled devices for free or via registration, called hotspots. A hotspot is a site that offers Internet access over a wireless local area network, typically via Wi-Fi connections, through the use of a router or access gateway connected to a network service provider, e.g. an Internet service provider.

Hotspots use in many cases a technology called "captive portal" for authentication purposes, which redirects a user to a special webpage for registration, when he connects his portable device with a hotspot. Only after registration of the user, for which in addition a payment may be required, the user is allowed to access the Internet with his portable device.

Hotspots are also known which allow users free access to some specific content, for example to information related to the hotspot or for advertisement, called "walled garden" of content. A "wallet garden" is known for example from US 2013/0111024 A1.

### SUMMARY OF THE INVENTION

The method for providing a hotspot service comprises the steps of receiving data packets from a portable device and allowing access to the Internet in case the device is already authorized for Internet access. In case the device is not authorized for Internet access, a header of the data packets is analyzed. Packets having a destination port 80 or 8080 are redirected to a login page and all packets having a destination port different from port 80 or 8080 are blocked. The hotspot service is provided in particular by a router or an access gateway and the login page by a backend server.

In a preferred embodiment, packets having a destination port 80 or 8080 and addressed to a walled garden of the hotspot service are directed to a respective walled garden Web page. The portable device is in particular an Internet enabled portable device with a Wi-Fi operation and the backend server is a server provided by a network service provider or is a server located in the Internet.

In another aspect of the invention, the method for providing a hotspot service comprises the steps of receiving data packets from an portable device, allowing access to the Internet in case the portable device is authorized for Internet access, in case the device is not authorized for Internet access, analyzing the header of the data packets, redirecting packets having a destination port 80 or 8080 to a login page, and blocking all packets having a destination port different from port 80 or 8080 with the exception to allow in addition data packets from a proxy server. The proxy server is in particular a local proxy server, for example a relay server sending data packets of type UDP according to a Dynamic Host Configuration Protocol and having a destination port 67, or a proxy server sending data packets of type UDP according to a Domain Name System and having a destination port 53.

The invention defines further a router performing one of the described methods.

In another aspect of the invention, a non-transitory computer readable storage medium is defined storing instructions for performing one of the described methods and an application comprising software instructions for performing one of the described methods.

### BRIEF DESCRIPTION OF THE DRAWINGS

Preferred embodiments of the invention are explained in more detail below by way of example with reference to schematic drawings, which show:
- Fig. 1: a portable device being connected to a hotspot, and
- Fig. 2: a flowchart illustrating a method for an operation of the hotspot of figure 1.

### DETAILED DESCRIPTION OF PREFERRED EMBODIMENTS

In the following description, a method for operating a hotspot comprising a captive portal is described. For purposes of explanation, numerous specific details are set forth in order to provide a thorough understanding of preferred embodiments. It will be evident, however, to one skilled in the art that the present invention may be practiced without these specific details.

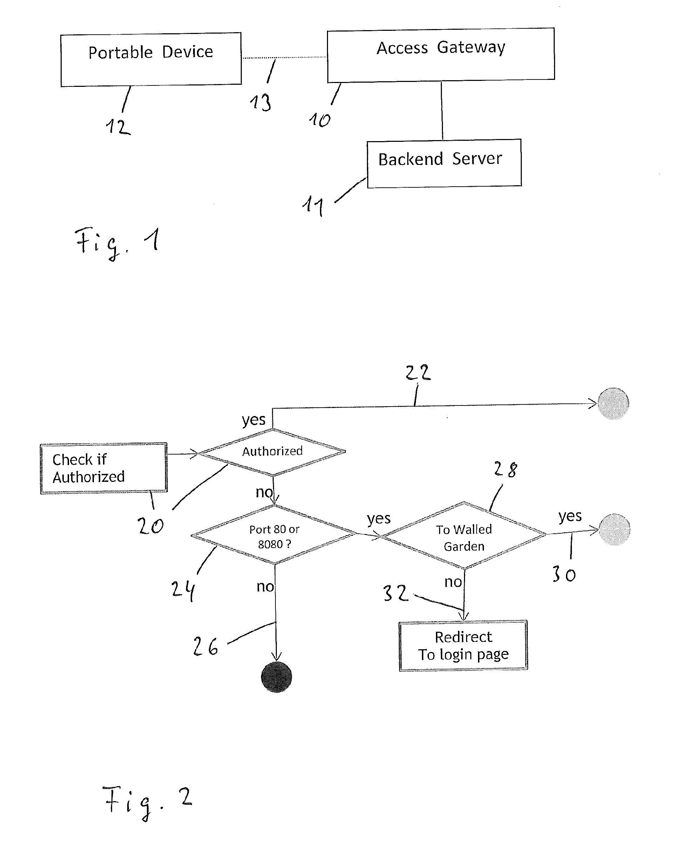

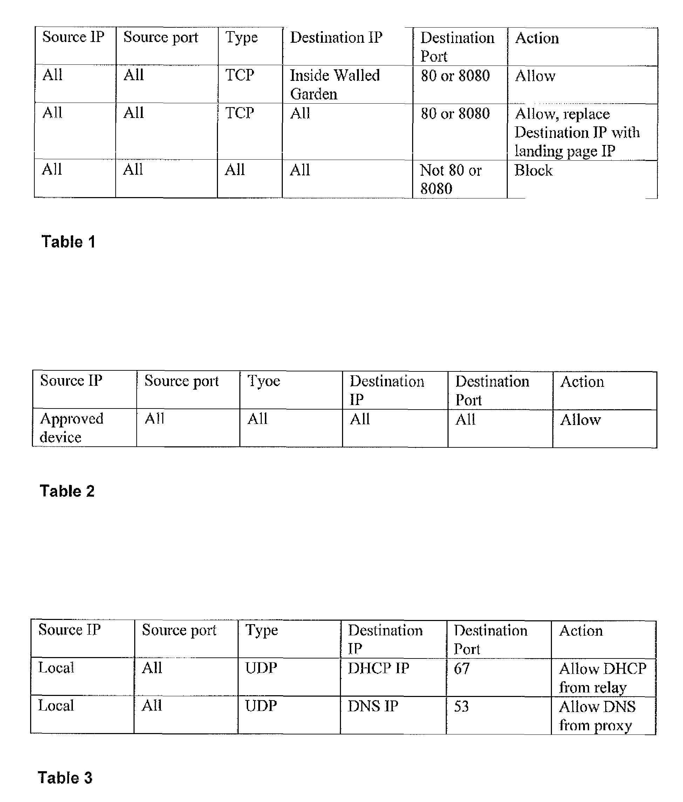

Figure 1 depicts in an exemplary embodiment a network for providing a hotspot service, comprising a first and a second network device 10, 11, e.g. a router or an access gateway 10 and a backend server 11. To the network, a portable device 12, in particular an Internet enabled portable device, for example a laptop, a tablet PC a smartphone or any other mobile device, is connected via a wireless link 13. Common wireless links use Wi-Fi connections according to one of the IEEE 802.11 standards, but other wireless connections are also known and may be used to connect to the access gateway 10 of the network. The access gateway 10 operates as the access device of the hotspot, and the backend server 11 controls the access of the portable device 12 to the Internet via the captive portal.

When the portable device 12 is connected via the link 13 with the access gateway 10, but is not authorized, and a user of the portable device 12 selects any Internet web page, e.g. by selecting a Hypertext Transfer Protocol (HTTP) address, he is redirected by the hotspot to another web page, the captive portal. The captive portal regulates the Internet access of the portable device 12, for example by authorization of the user, which can be made for example by registration of the user and/or by making a payment. The gateway 10 may allow access also to a closed platform, called walled garden, where the operator of the access gateway 10 and the backend server 11 allows the user of the portable device 12 to access applications, content or any media without authorization free of charge.

The operation of the hotspot is performed as illustrated in figure 2. When the portable device connects to the access gateway 10, first it is checked that the portable device is authorized, step 20. When the portable device is authorized, free access to the Internet is granted: For example, the portable device is already known to the access gateway 10 and the user has paid a fee for the Internet access, step 22. In case the portable device is not authorized, then the access gateway 10 checks whether the Internet request is a TCP request related to destination port 80 or 8080, step 24. In case the data packets of the Internet request do not include port 80 or 8080 in the header, then these packets will be blocked, step 26. Data packets not using port 80 or 8080 are for example packets according to a file transfer protocol (FTP) or a Voice over Internet Protocol (VoIP).

If the data packets include port 80 or 8080 in the header, it is checked whether the Internet request is directed to a walled garden service, step 28. If the Internet request is directed to the walled garden service, then the access is allowed, step 30, if not, then the Internet request is redirected to a login page provided by the backend server 11, step 32. On the login page, the user can authorize himself and make a payment, if necessary.

The method steps as illustrated in figure 2 are summarized in table 1 below illustrating the hotspot operation of the access gateway 10 in case the user is not authorized. All data packets of a device having any source IP address and source port, for example the portable device 12, is accepted by the access gateway 10. Any data packets of type TCP and port address 80 or 8080 having a destination address of the walled garden are allowed by the access gateway 10. All data packets of type TCP and having a destination port 80 or 8080 not being directed to the walled garden are allowed, but the destination address is replaced by the landing page of the backend server 11, where the user has to authorize his device. If the data packets of the Internet request do not include port 80 or 8080 in the header, then all packets will be blocked.

**Table 1**

| Source IP | Source port | Type | Destination IP | Destinatio n Port | Action |
|---|---|---|---|---|---|
| All | All | TCP | Inside Walled Garden | 80 or 8080 | Allow |
| All | All | TCP | All | 80 or 8080 | Allow, replace Destination IP with landing page IP |
| All | All | All | All | Not 80 or 8080 | Block |

The access gateway 10 separates therefore all data packets not having port 80 or 8080 in its header by blocking these data packets, forwarding all Internet requests directed to the walled garden of the hotspot to the walled garden and forwarding other Internet requests having port 80 or 8080 in its header but not being directed to the walled garden to the login page of the Internet sever 11.

The redirection to the captive portal happens therefore at the IP level, Internet Protocol layer 3, in the access gateway 10, and not at the HTTP level at the backend server 11. Hence, the HTTP request remains unmodified in the access gateway 10, and is handled properly by the backend server 11. The processor load of the backend server 11 is therefore essentially reduced.

For example: a request to http://www.cnn.com/articles/main.php will be redirected to the IP address of the landing page, but still with the same HTTP request. Another example: Assume the HTTP redirection has the IP address 10.0.0.1 and the walled garden the IP address 10.0.x.x. The client device has the IP address 10.1.1.1 and is connected to an access gateway with IP address 10.1.0.1. The client on the gateway makes a connection to 8.8.8.8 on port 47. He is blocked. The client now makes a connection to 8.8.8.8 on port 80. This request is modified to 10.0.0.1. That request returns a redirection to 10.0.0.2. Since this address is in the range of the walled garden, the connection goes through. As soon as the user has given his credentials on the captive portal for authorization, the rule to let pass all traffic from 10.1.1.1 is established on the access gateway with IP address 10.1.0.1.

If the portable device 12 is already authorized, all data packets are allowed to all destination addresses, as shown in table 2. In this case, all traffic coming from the portable device 12 will be routed unmodified by the access gateway 10.

**Table 2**

| **Source IP** | **Source port** | **Tyoe** | **Destination IP** | **Destination Port** | **Action** |
|---|---|---|---|---|---|
| **Approved device** | **All** | **All** | **All** | **All** | **Allow** |

Further, some rules at the top of table 1 may be included to allow DHCP and DNS traffic from local proxy servers. As shown in table 3 below, data packets of type UDP according to a Dynamic Host Configuration Protocol (DHCP) coming from a relay server and having the destination port 67 are allowed by the access gateway 10. Also allowed are data packets of type UDP according to a Domain Name System (DNS) coming from a proxy server and having the destination port 53.

**Table 3**

| **Source IP** | **Source port** | **Type** | **Destination IP** | **Destination Port** | **Action** |
|---|---|---|---|---|---|
| **Local** | **All** | **UDP** | **DHCP IP** | **67** | **Allow DHCP from relay** |
| **Local** | **All** | **UDP** | **DNS IP** | **53** | **Allow DNS from proxy** |

Since the redirection on the access gateway 10 happens at Layer 3 (IP layer), the redirection at the HTTP Level is handled at the backend server 11. A catchall HTTP handler is implemented that will catch all the HTTP requests that have been redirected by the access gateway 10. This HTTP requests handled will result in a 302 or 307 temporary redirect. This will trigger the pop-up window for the captive portal in many operating systems, such as iOS and Windows. The redirection will go to a small HTTP page with a Javascript redirect, which will handle redirection from pages consisting of several frames. If a user happens to be on a page with several frames and the redirection will kick in, it should be avoided that the captive page shows up in all subframes. The javascript redirection will prevent this. The javascript will redirect to a final page inside the walled garden, where the authentication is processed with credentials, credit card payment or any other method.

By handling the redirection at the IP level via Network Address Translation (NAT) rules in the access gateway 10, the redirection can be hardware accelerated within the existing acceleration engines of network processors. The method does not require HTTP redirecting at the access gateway, which would slow down the overall network experience of the user, and it does not require HTTP redirection at the backend server, which will require a heavy investment in backend server infrastructure. By doing the IP level redirection at the gateway and the HTTP redirection at the backend server, a balanced and optimized solution for network performance and capital expenditures is therefore provided.

Also other embodiments of the invention may be utilized by one skilled in the art without departing from the scope of the present invention. The portable device is in particular an Internet-enabled portable device and the data packets are for example IP (Internet Protocol) packets according to Internet protocol Version 4 or Version 6. The invention resides therefore in the claims herein after appended.

## Claims

1. Method for providing a hotspot service (1), comprising the steps of
receiving data packets from a portable device (12),
allowing access to the Internet in case the device is authorized for Internet access (20, 22),
in case the portable device is not authorized for Internet access, analyzing a header of the data packets (24),
redirecting packets having a destination port 80 or 8080 to a login page (32), and
blocking all packets having a destination port different from port 80 or 8080 (26).

2. The method of claim 1, wherein the hotspot service is provided by a router (10).

3. The method of claim 1 or 2, comprising the steps of redirecting packets having a destination port 80 or 8080 to a
login page of a backend server (11) located in the Internet.

4. The method of claim 1, 2 or 3, comprising the steps of
directing packets having a destination port 80 or 8080 and addressed to a walled garden of the hotspot service to a respective walled garden Web page.

5. Method for providing a hotspot service (1), comprising the steps of
receiving data packets from a portable device (12),
allowing access to the Internet in case the device is authorized for Internet access,
in case the portable device is not authorized for Internet access, analyzing a header of the data packets,
redirecting packets having a destination port 80 or 8080 to a login page,
blocking all packets having a destination port different from port 80 or 8080, exception: allow data packets from a proxy server.

6. The method of claim 5, wherein the hotspot service is provided by a router (10).

7. The method of claim 5 or 6, comprising the steps of redirecting packets having a destination port 80 or 8080 to a
login page of a backend server (11) located in the Internet.

8. The method of claim 5, 6 or 7, comprising the steps of
directing packets having a destination port 80 or 8080 and addressed to a walled garden of the hotspot service to a respective walled garden Web page.

9. The method of one of the preceding claims 5-8, wherein the proxy server is a local proxy server, for example a relay server sending data packets of type UDP according to a Dynamic Host Configuration Protocol and having a destination port 67, or a proxy server sending data packets of type UDP according to a Domain Name System and having a destination port 53.

10. Router performing a method according to one of the preceding claims.

11. A non-transitory computer readable storage medium storing instructions for performing a method according to one of the preceding claims 1-9.

12. Application comprising software instructions for performing a method according to one of the preceding claims 1-9.
